# EUROPEAN PATENT APPLICATION

(11) **EP 4 440 205 A1**
(43) Date of publication of application: **02.10.2024**
(21) Application number: 24167541.2
(22) Date of filing: 28.03.2024
(51) Int. Cl.: H04W 52/02

(54) **ADJUSTING REFERENCE CLOCK FOR WAKE UP SIGNALS**

(30) Priority: 30.03.2023 FI 20235363
(71) Applicant: Nokia Technologies Oy, 02610 Espoo (FI)
(72) Inventor: Hviid, Jan Torst, 9270 Klarup (DK); Knudsen, Knud, 9440 Aabybro (DK); Lauridsen, Mads, 9260 Gistrup (DK); Soni, Brajesh, 495119 Gaurela-Pendra-Marwahi (IN); Manna, Tanumay, 560048 Bangalore (IN)
(74) Representative: Kolster Oy Ab

(57) **Abstract**

To increase accuracy of a reference clock based on which reception occurrences are monitored (301), a specific signal sequence for a wake up signal is used. The specific signal sequence comprises a blank symbol followed by a synchronization sequence for which a reference value is counted (306) and a target value determined (305). At least frequency of the reference clock is adjusted (308) based on the reference value and the target value.

## Description

### TECHNICAL FIELD

Various example embodiments relate to communication systems.

### BACKGROUND

Communication systems are under constant development. The 5G (fifth generation), 5G-Advanced, and beyond future wireless networks, or network generations, aim to support a large variety of services, use cases and industrial verticals. It is envisaged that for power saving purposes while allowing latency-critical services, for example, devices may be equipped with additional low-power circuitries dedicated to receive so-called wake up signals to wake up devices to communicate when needed in an event-driven manner.

### SUMMARY

The independent claims define the scope, and different embodiments are defined in dependent claims.

According to an aspect there is provided an apparatus comprising at least: means for monitoring, based on a reference clock, reception occurrences of wake up signals in time and frequency domains, a wake up signal having at least a first level and a second level; means for determining signal reception levels during the reception occurrences; means for detecting an occurrence of a blank symbol of a wake up signal when a signal received during a reception occurrence remains at the first level for a first predetermined time; means for detecting a start of a synchronization sequence of the wake up signal when within a second predetermined time after the occurrence of the blank symbol, the signal received changes to the second level and remains at the second level for at least a third predetermined time and for at most a fourth predetermined time; means for determining a target value for the reference clock at the end of a reference sequence; means for counting a reference value between the start of the synchronization sequence and the end of the reference sequence; and means for adjusting at least frequency of the reference clock based on the reference value and the target value.

In embodiments, the apparatus further comprises means for triggering a network search upon detection that a fifth predetermined time has expired after the last time the signal remained at the second level at least the third predetermined time and at most the fourth predetermined time during a reception of the synchronization sequence.

In embodiments, the apparatus further comprises means for triggering a network search when after the occurrence of the blank symbol no start of a synchronization sequence is detected.

In embodiments, the apparatus further comprises means for communicating with a cellular network, wherein the network search is a cellular network search and the means for triggering the network search is configured to enable the means for communication with the cellular network.

In embodiments, the apparatus further comprises means for counting, after the occurrence of the blank symbol, a number of occasions during which the signal received changes to the second level and remains at the second level for at least the third predetermined time and for at most the fourth predetermined time; and means for detecting the end of the synchronization sequence when the number reaches a preset number.

In embodiments, the end of the reference sequence is the end of the synchronization sequence following the blank symbol or the end of a next synchronization sequence.

In embodiments, the end of the reference sequence is a start time of a next synchronization sequence.

In embodiments, the means for determining the signal reception levels is configured to compare a reception level to a preset threshold and determine that the signal is at the first level, when the level is below the preset threshold.

In embodiments, the means for determining the signal reception levels is configured to determine that the signal is at the second level, when the level is equal to or above the preset threshold.

In embodiments, the means for determining the signal reception levels are further configured to compare the reception level to a second preset threshold and determine that the signal is at the second level, when the level is above the second preset threshold.

In embodiments, the means for monitoring is configured to monitor the reception occurrences discontinuously.

In embodiments, the means comprise at least one processor; and at least one memory storing instructions that, when executed by the at least one processor, cause the performance of the apparatus.

According to an aspect, there is provided an apparatus comprising at least one processor; and at least one memory storing instructions that, when executed by the at least one processor, cause the apparatus to at least: monitor, based on a reference clock, reception occurrences of wake up signals in time and frequency domains, a wake up signal having at least a first level and a second level; determine signal reception levels during the reception occurrences; detect an occurrence of a blank symbol of a wake up signal when a signal received during a reception occurrence remains at the first level for a first predetermined time; detect a start of a synchronization sequence of the wake up signal when within a second predetermined time after the occurrence of the blank symbol, the signal received changes to the second level and remains at the second level for at least a third predetermined time and for at most a fourth predetermined time; determine a target value for the reference clock at the end of a reference sequence; count a reference value between the start of the synchronization sequence and the end of the reference sequence; and adjust at least frequency of the reference clock based on the reference value and the target value.

According to an aspect there is provided a method comprising: monitoring, based on a reference clock, reception occurrences of wake up signals in time and frequency domains, a wake up signal having at least a first level and a second level; determining signal reception levels during the reception occurrences; detecting an occurrence of a blank symbol of a wake up signal when a signal received during a reception occurrence remains at the first level for a first predetermined time; detecting a start of a synchronization sequence of the wake up signal when within a second predetermined time after the occurrence of the blank symbol, the signal received changes to the second level and remains at the second level for at least a third predetermined time and for at most a fourth predetermined time; determining a target value for the reference clock at the end of a reference sequence; counting a reference value between the start of the synchronization sequence and the end of the reference sequence; and adjusting at least frequency of the reference clock based on the reference value and the target value.

In embodiments, the method further comprises at least triggering a network search upon detection that a fifth predetermined time has expired after the last time the signal remained at the second level at least the third predetermined time and at most the fourth predetermined time during a reception of the synchronization sequence.

In embodiments, the method further comprises at least triggering a network search when after the occurrence of the blank symbol no start of a synchronization sequence is detected.

In embodiments, the method further comprises enabling communication with a cellular network when a cellular network search is triggered.

In embodiments, the method further comprises at least: counting, after the occurrence of the blank symbol, a number of occasions during which the signal received changes to the second level and remains at the second level for at least the third predetermined time and for at most the fourth predetermined time; and detecting the end of the synchronization sequence when the number reaches a preset number.

In embodiments, the end of the reference sequence is the end of the synchronization sequence following the blank symbol or the end of a next synchronization sequence.

In embodiments, the end of the reference sequence is a start time of a next synchronization sequence.

In embodiments, the method further comprises at least determining the signal reception levels by comparing a reception level to a preset threshold and by determining that the signal is at the first level, when the level is below the preset threshold.

In embodiments, the method further comprises at least determining that the signal is at the second level, when the level is equal to or above the preset threshold.

In embodiments, the method further comprises at least comparing the reception level to a second preset threshold and determining that the signal is at the second level, when the level is above the second preset threshold.

In embodiments, the method further comprises at least monitoring is the reception occurrences discontinuously.

According to an aspect there is provided a computer program comprising instructions which, when executed by an apparatus, cause the apparatus to perform at least the following: monitoring, based on a reference clock, reception occurrences of wake up signals in time and frequency domains, a wake up signal having at least a first level and a second level; determining signal reception levels during the reception occurrences; detecting an occurrence of a blank symbol of a wake up signal when a signal received during a reception occurrence remains at the first level for a first predetermined time; detecting a start of a synchronization sequence of the wake up signal when within a second predetermined time after the occurrence of the blank symbol, the signal received changes to the second level and remains at the second level for at least a third predetermined time and for at most a fourth predetermined time; determining a target value for the reference clock at the end of a reference sequence; counting a reference value between the start of the synchronization sequence and the end of the reference sequence; and adjusting at least frequency of the reference clock based on the reference value and the target value.

### BRIEF DESCRIPTION OF DRAWINGS

Embodiments are described below, by way of example only, with reference to the accompanying drawings, in which
Fig. 1 illustrates an exemplified high-level network architecture;
Fig. 2A illustrates an example of information;
Fig. 2B illustrates an example of information;
Fig. 2C illustrates an example of information;
Fig. 3 illustrates an example functionality;
Fig. 4 illustrates an example functionality;
Fig. 5 illustrates an example functionality;
Fig. 6 illustrates an example functionality;
Fig. 7 is a schematic block diagram; and
Fig. 8 is a schematic block diagram.

### DETAILED DESCRIPTION OF SOME EMBODIMENTS

The following embodiments are only presented as examples. Although the specification may refer to "an", "one", or "some" embodiment(s) and/or example(s) in several locations, this does not necessarily mean that each such reference is to the same embodiment(s) or example(s), or that a particular feature only applies to a single embodiment and/or single example. Single features of different embodiments and/or examples may also be combined to provide other embodiments and/or examples. Furthermore, words "comprising" and "including" should be understood as not limiting the described embodiments to consist of only those features that have been mentioned and such embodiments may contain also features/structures that have not been specifically mentioned. Further, although terms including ordinal numbers, such as "first", "second", etc., may be used for describing various elements, the elements are not restricted by the terms. The terms are used merely for the purpose of distinguishing an element from other elements. For example, a first level could be termed a second level, and similarly, a second level could be also termed a first level without departing from the scope of the present disclosure.

5G-Advanced, and beyond future wireless networks aim to support a large variety of services, use cases and industrial verticals, for example unmanned mobility with fully autonomous connected vehicles, other vehicle-to-everything (V2X) services, or smart environment, e.g. smart industry, smart power grid, or smart city, just to name few examples. To provide a variety of services with different requirements, such as enhanced mobile broadband, ultra-reliable low latency communication, massive machine type communication, wireless networks are envisaged to adopt network slicing, flexible decentralized and/or distributed computing systems and ubiquitous computing, with local spectrum licensing, spectrum sharing, infrastructure sharing, and intelligent automated management underpinned by mobile edge computing, artificial intelligence, for example machine learning, based tools, cloudification and blockchain technologies. For example, in the network slicing multiple independent and dedicated network slice instances may be created within the same infrastructure to run services that have different requirements on latency, reliability, throughput and mobility.

6G (sixth generation) networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G will include intelligent connected management and control functions, programmability, joint communication and sensing, reduction of energy footprint, trustworthy infrastructure, scalability and affordability. In addition to these, 6G is also targeting new use cases covering the integration of localization and sensing capabilities into system definition to unifying user experience across physical and digital worlds.

It is envisaged that especially for combining power saving purposes and latency-critical services devices may be equipped with additional low-power circuitries dedicated to receive so-called wake up signals to wake up devices to communicate when needed in an event-driven manner. It is envisaged that an additional low-power circuitry will consume very little power by a simple design of a wake up signal and use of dedicated hardware able to receive only wake up signals. However, further power saving may be obtained by a dedicated portion of wake up signals that may maintain accuracy of a reference clock of a device without waking up the device, as will be described herein.

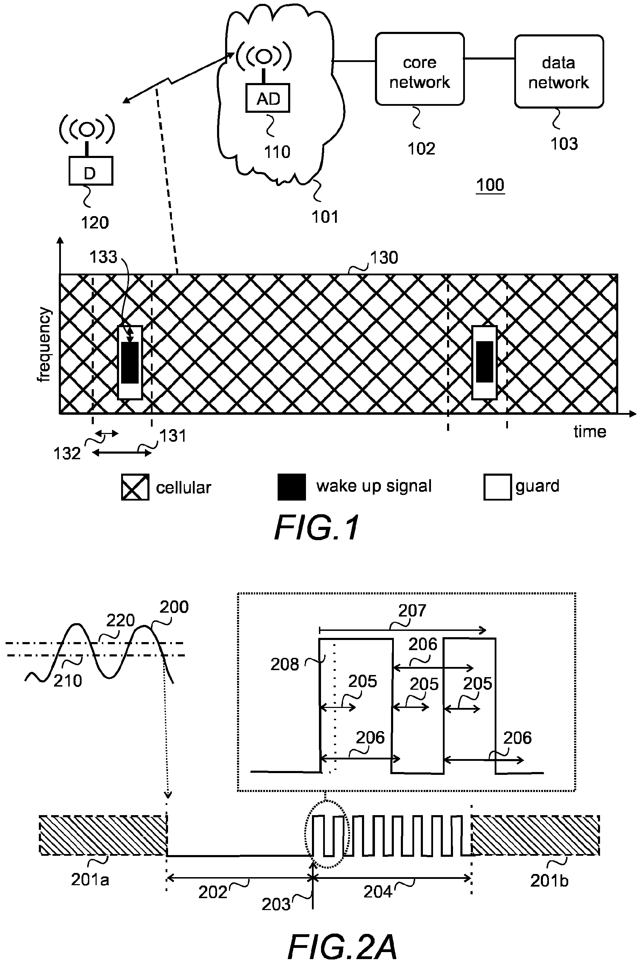

Fig. 1 illustrates an exemplified high-level network architecture 100, only showing some details, the more detailed implementation being irrelevant for the description of examples. The examples are described herein using principles and terminology of 5G and 5G-Advanced. A person skilled in the art may apply the solutions and examples to other communication systems, for example beyond 5G-Advanced, or communication system implementing similar principles and functionalities, possibly with different terms having corresponding meaning, but using some other than 5G technology.

Referring to Fig. 1, a radio access network 101 provides wireless access to devices 120 (only one illustrated) via a core network 102 to one or more data networks 103.

The radio access network 101 may be a cellular network, for example a 5G-Advanced network, a non-terrestrial network, or a non-cellular access network, for example a wireless local area network, implementing the concept of dedicated wake up signals for power saving. It should be appreciated that a wake up signal may be a wake up beacon or a wake up signal beacon.

To provide the wireless access, the radio access network 101 comprises access devices 110 (only one illustrated), which may provide one or more cells. There are a wide variety of access devices, including different types of base stations, such as as eNBs, gNBs, split gNBs, transmission-reception points, network-controlled repeaters, nodes operationally coupled to one or more remote radio heads, satellites, donor nodes in integrated access and backhaul (IAB), fixed IAB nodes, mobile IAB nodes mounted on vehicles, for example, etc. The access devices provide wireless connections for communication by transmitting and receiving radio signals via antenna units that may comprise a plurality of antennas or antenna elements, for example for multiple-input, multiple-output technology.

The core network 102 may be based on a non-standalone core network, for example an LTE-based network, or a standalone access network, for example a 5G core network. However, it should be appreciated that the core network 102 may use any technology that enable network services to be delivered between devices and data networks.

The data network 103 may be any network, like the internet, an intra-net, a wide area network, and different remote monitoring and/or data collection services for different use cases may be reached via the data network 103.

The device 120 may be an apparatus equipped to implement, as will be described in more detail below, power saving by means of an additional low-power circuitry. Term "wake up receiver" is used herein as a synonym to the additional low-power circuitry. The wake up receiver may be configured to trigger, upon detection of a wake up signal targeted to the apparatus, one or more circuitries of the apparatus to communicate over the radio access network. The one or more circuitries may be called a main radio, for example a New Radio (5G) radio. The power saving may be needed, for example for smart devices comprising non-rechargeable batteries and/or batteries with requirements for longer recharging periods and/or for smart phones in a low battery state. For example, industrial wireless sensors may require that batteries should last few years, and wearable devices that recharging period should be more than multiple days, for example a week. Still a further possibility includes non-rechargeable batteries. A non-limiting list of such apparatuses (devices) that may comprise the wake up receiver include industrial internet of things devices, consumer internet of things devices, different sensors, like pressure sensors, humidity sensors, thermometers, motion sensors, actuators, accelerometers, etc., surveillance cameras, wearable devices, such as smart watches, rings, eHealth related devices, medical monitoring devices, smart phones, automated guided vehicles, autonomous connected vehicles etc.,

In 5G-Advanced networks and beyond, it is envisaged that wake up signals are transmitted within other radio access network traffic resources, for example cellular traffic resources, or New Radio traffic resources, as illustrated by a two-dimensional representation 130 of a signal in Fig 1. In the illustrated example, the wake up signals, depicted by black rectangles, are located in a cellular band (diagonal squares) with guard spaces, depicted by white rectangles. The integration of the wake up signals within the other radio access network traffic resources set indirect timing and frequency requirement, so that the wake up receiver is able to detect and decode a wake up signal by selecting a correct frequency allocated for the wake up signal and to detect the wake up signal at a correct time.

Depending on an implementation, the device 120 may monitor reception occurrences of wake up signals continuously or in a discontinuous manner. In the discontinuous manner implementations, the wake up receiver needs also some time to wake up. In both implementations the monitoring is based on a reference clock. For example, a clock used for idle/sleep timer of the main radio may be reused as the reference clock, and hence no extra power is consumed. The more accurate the reference clock is, the smaller a time 132 to accommodate a time drift due to a frequency offset in the reference clock and the smaller frequency guard 133 to accommodate frequency offset may be. When discontinuous reception is implemented, an accurate reference clock enables scheduling the reception at a correct time. The smaller time 132 and the smaller frequency guard 133 result to a smaller active time 131 over a smaller frequency range, thereby saving power.

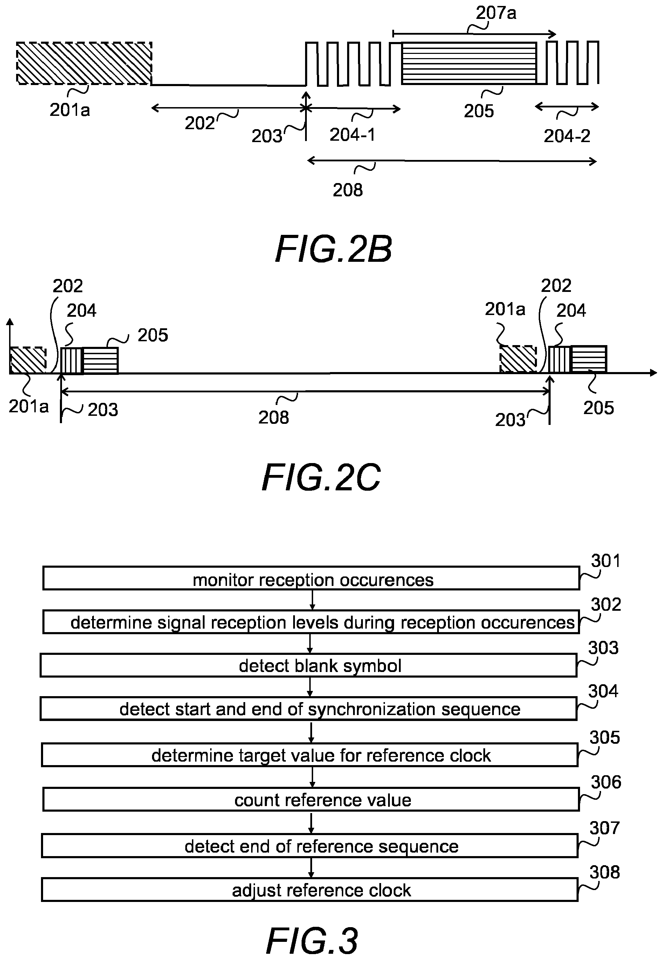

Fig. 2A, Fig. 2B and Fig. 2C illustrate different examples of reference sequencies that are based on different examples of a signal synchronization sequence for a wake up signal to adjust, or correct, the reference clock to take into account a frequency offset and thereby to minimize the active time, the size of the frequency guard, and the power consumed. The signal synchronization sequences illustrated in Fig. 2A and Fig. 2B are examples of the dedicated portion of wake up signals that may maintain accuracy of the reference clock. Fig. 2C illustrates an alternative reference sequence for the dedicated portion of Fig. 2A. Applying the reference sequence of Fig. 2C to the examples of Fig. 2B is a straightforward task for one skilled in the art. The longer the duration of a reference sequence is, the more accurately the reference clock can be adjusted. With the example of Fig. 2A, a good accuracy may be obtained, but the example of Fig. 2C provides even better accuracy.

Referring to Fig. 2A, a signal 200 is received, and contains during a reception occurrence of wake up signals a blank symbol 202, followed by a synchronization sequence 204, starting at time 203, for adjusting the reference clock, as will be described in more detail below. In the example of Fig. 2A, a reference sequence is the synchronization sequence, and hence the end of the synchronization sequence is used also for adjusting the reference clock. Any symbol or sequence 201a may precede the blank symbol 202, and any symbol or sequence 201b may follow the synchronization sequence 204. For example, sequence 201b may or may not contain a wake up signal. Regardless of modulation type, the blank symbol is recognizable as a unique sequence and can therefore be used for several purposes, for example for setting a bias level for level determination and/or for serving as a time synchronization initializer. The synchronization sequence can be used for adjusting the reference clock, as will be described below. Further, the synchronization sequence may be part of a wake up signal, for example forming a beginning of a wake up signal sequence. The blank symbol may be called a blank section and the synchronization sequence may be called a synchronization section.

In the illustrated example, the blank symbol 202 is detected when a reception level of the signal 200 is at a first level for a first predetermined time. The signal 200 is at the first level, when the reception level is below a preset threshold 210. The duration of the blank symbol 202 may be similar to a duration of a New Radio symbol. The first predetermined time may be in the range of 2/3 of the duration of the blank symbol to ensure that no reception power or low reception power level is detected.

The start 203 of the synchronization sequence 204 is detected, when within a second predetermined time after the occurrence of the blank symbol 203, the signal received changes to a second level and remains at the second level for at least a third predetermined time 205 and for at most a fourth predetermined time 206. The third predetermined time 205 is a minimum time requirement and the fourth predetermined time 206 is a maximum time requirement. In an implementation, there may be another preset threshold, a second threshold 220, for the second level, and the signal is at the second level, when the level is above the second preset threshold. In another implementation, there is only one preset threshold 210, and the signal is at the second level, when the level is equal to or above the preset threshold.

The synchronization sequence 204 comprises a plurality of transitions from the second level to the first level and from the first level to the second level. A duration the signal remains at the first level and/or at the second level may be similar to the duration of a New Radio symbol, or a duration of a bit. End of the synchronization sequence, and in the example of Fig. 2A end of the reference sequence, may be determined when a number of occasions during which the signal received changes to the second level and remains at the second level for at least the third predetermined time 205 and for at most the fourth predetermined time 206 reaches a preset number.

The use of the third and fourth predetermined time enables to handle cyclic prefixes and spikes that may be generated by fading and noise. For example, the synchronization sequence may begin with a cyclic prefix 208 at the second level, and, depending on the length of the synchronization sequence, there may be further cyclic prefixes. When a cyclic prefix would be sent so that it would be followed by a transition to the first level, the duration of the cyclic prefix would be smaller than the third predetermined time 205 and hence the cyclic prefix would be disregarded from evaluation of the number of transitions. In the illustrated example, when the cyclic prefix is followed by a signal at the second level, remaining together at the second level at most the fourth predetermined time 206, the cyclic prefix can be included in the evaluation since the number of transitions remain the same. By the fourth predetermined time 206 it is ensured that the signal follows the dedicated format of the synchronization sequence.

If a fifth predetermined time 207 expires after the last time the signal remained at the second level at least the third predetermined time (205) and at most the fourth predetermined time (206) during a reception of the synchronization sequence without transiting back to the second level, a reception error is detected. In an implementation in which the fifth predetermined time 207 is monitored from the time the signal transited to the second level, the fifth predetermined time 207 may be equal to or a little bit longer than two times the fourth predetermined time 206. In an implementation in which the fifth predetermined time 207 is monitored from the time the signal transited from the second level to the first level, the fifth predetermined time 207 may be equal to or a little bit longer than the fourth predetermined time 206.

The longer the duration of the reference sequence is, the more accurately the reference clock can be adjusted.

Referring to Fig. 2B, a signal is received, and contains during a reception occurrence of wake up signals a blank symbol 202, followed by a first part 204-1of the synchronization sequence, starting at time 203, followed by a wake up signal 205, which in turn is followed by a second part 204-2 of the synchronization sequence, for adjusting the reference clock, as will be described in more detail below. The wake up signal 205 may be, in view of a receiving apparatus, just a resource reserved for a wake up signal, targeted to another apparatus. The first part 204-1 and/or the second part 204-2 may be part of the wake up signal 205. In the example of Fig. 2B, a reference sequence 208 is the sequence between the start of the first part 204-1 of synchronization sequence, and the end of the second part 204-2 of the synchronization sequence. Any symbol or sequence 201a may precede the blank symbol 202 Even though not illustrated in Fig. 2B, any symbol or sequence may follow the second part of the synchronization sequence 204-2. The first part 204-1 and the second part 204-2 of the synchronization sequence may be similar, for example corresponding to the synchronization sequence of Fig. 2A. The first part 204-1 and the second part 204-2 of the synchronization sequence may be different from each other, for example the first part being a little bit longer that the second part, the parts together corresponding to the synchronization sequence of Fig. 2A. In the illustrated example of Fig. 2B, the fifth predetermined time 207a preferably takes into account the duration of the wake up signal 205. With a longer duration, the accuracy of the reference clock can be further improved.

In an implementation, an apparatus may be configured to use the reference time as defined in Fig. 2B, when a wake up signal targeted to the apparatus is received after the synchronization signal (the first part 204-1 of the synchronization signal), and the reference time as defined in Fig. 2A when no wake up signal targeted to the apparatus is received.

Referring to Fig. 2C, a signal is received in a discontinuous manner, and contains during a reception occurrence of wake up signals a blank symbol 202, followed by the synchronization sequence 204, starting at time 203, followed by a wake up signal 205, repeated in the illustrated example of Fig. 2C per a discontinuous reception cycle. Any symbol or sequence 201a may precede the blank symbol 202. In the illustrated, the reference sequence 208 for adjusting the reference clock is determined between starting times of two the synchronization sequences (a synchronization sequence and a next synchronization sequence), and the duration of the reference sequence corresponds to the duration of the discontinuous reception cycle.

As can be seen, different reference sequences and synchronization sequences may be used, for example multibed sequences may be used, as long as parameters relating to the sequence(s) are predetermined (known), for example preconfigured or preset.

Fig. 3 illustrates an example functionality of an apparatus monitoring reception occurrences of wake up signals and being configured to adjust a reference clock based on which the monitoring is performed.

Referring to Fig. 3, the apparatus monitors in block 301, based on a reference clock, reception occurrences of wake up signals in time and frequency domains. The reference clock may be a low accuracy clock, for example an oscillator with an accuracy of 200 in parts per million (ppm). The accuracy of an oscillator represents how much the frequency of the oscillator can deviate from its nominal value.

The apparatus determines in block 302 signal reception levels during the reception occurrences, for example as described above with Fig. 2A, and detects in block 303 an occurrence of a blank symbol of a wake up signal when a signal received during a reception occurrence remains at the first level for the first predetermined time. The apparatus detects in block 304 a start of a synchronization sequence of the wake up signal. The start is detected when within a second predetermined time after the occurrence of the blank symbol, the signal received changes to the second level and remains at the second level for at least the third predetermined time and for at most the fourth predetermined time, as described above with Fig. 2A. The apparatus further determines in block 305 a target value for the reference clock at the end of the synchronization sequence. The target value means a value that the reference clock should have at the end of the reference sequence if the reference clock would be an extremely accurate clock. The target value may be determined based on known information on the frequency and duration of the reference sequence and bit rate. The target value may be also called as an expected value. The apparatus also counts in block 306 a reference value between the start of the synchronization sequence and the end of the reference sequence. The reference value is the actual value counted based on the reference clock. The end of the reference sequence is detected in block 307, ending also the counting of the reference value. Different examples of the reference sequence are described above with Fig. 2A, Fig. 2B and Fig. 2c. At least frequency of the reference clock is adjusted in block 307 based on the reference value and the target value. For example, the difference between the target value and the refence value counted may be used as frequency offset to correct at least the frequency of the reference clock towards its nominal value. Hence, the accuracy of a clock, for example the low accuracy clock, can be improved. Frequency accuracy may be calculated for various configurations based on sample time and duration of the reference sequence. For example, for a low accuracy clock having an accuracy of 200 ppm, by applying the procedure of Fig. 3 approximately 10 times better accuracy may be obtained depending on whether the approach in figure 2A, 2B or 2C is used. This will minimize the required guard band size, i.e. the required guard band separation, due to a smaller frequency offset. Especially for the implementation using discontinuous monitoring of wake up signals a more accurate, i.e. shorter, wakeup time may be determined, which means that power consumption will be smaller due to a longer sleep duration and shorter active time required. Using the example of Fig. 2C, a discontinuous reception cycle of 1.28 second, and sample accuracy 10MHz, the clock accuracy, i.e. the uncertainty of time and frequency estimation, may be 0,08 ppm.

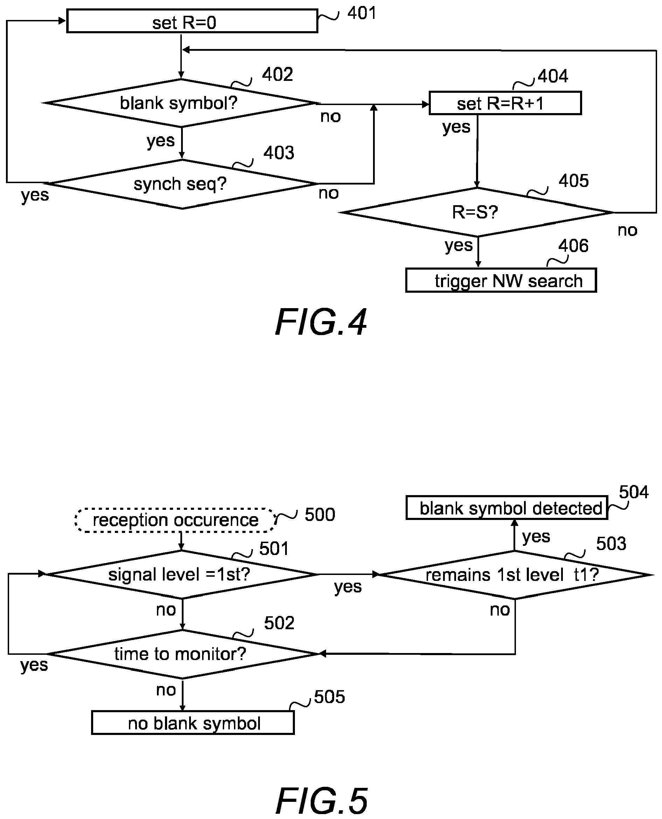

Fig. 4 illustrates a background process the apparatus may perform with the other process described herein.

Referring to Fig. 4, a background counter value R is set, or reset, in block 401 to be zero. Then the background process determines in block 402, whether a blank symbol is detected during a reception occurrence monitored. If the blank symbol is detected (block 402: yes), it is monitored in block 403, whether a synchronization sequence is received during the reception occurrence. If the synchronization sequence is received (block 403: yes), the process returns to block 401 to set the background counter value R to be zero.

If the blank symbol is not detected (block 402: no), or if the synchronization sequence is not received (block 403: no), the background counter value R is incremented in block 404 by one. In other words, in block 404 the background counter value R is set to be R+1. Then it is checked in block 405, whether the background counter value R has reached a preset maximum value S. If not (block 405: no), the process returns to block 402 to determine, whether a blank symbol is detected. If the background counter value R has reached the preset maximum value S (block 405: yes), it indicates that the apparatus may be out of coverage and a network (NW) search is triggered in block 406. The network search may be performed by the wake up receiver, or triggering the network search may include enabling means for communication with a cellular network, for example enabling (turning on) the main radio, to perform the network search.

Fig. 5 illustrates an example functionality relating to detection of blank symbols.

Referring to Fig. 5, when there is a reception occurrence (block 500), it is monitored in block 501, whether the signal level is at or transits to the first level while (block 502) it is still time to monitor the reception occurrence, for example the active time has not ended. If it is detected that the signal level is at or transits to the first level (block 501: yes), it is monitored (block 503) whether the signal remains at the first level for the first predetermined time t1. Examples of the first predetermined time are given above with Fig. 2A, for example. If the signal remains at the first level the time t1 (block 503: yes), a blank symbol is detected (block 504) during the reception occurrence.

If the signal does not remain at the first level for the first predetermined time t1, the process returns to block 502 to check, whether there still is time to monitor, and if there is, whether the signal level transits (block 501) to the first level.

If there is not any more time to monitor (block 502: no), no blank symbol was detected (block 505) during the reception occurrence.

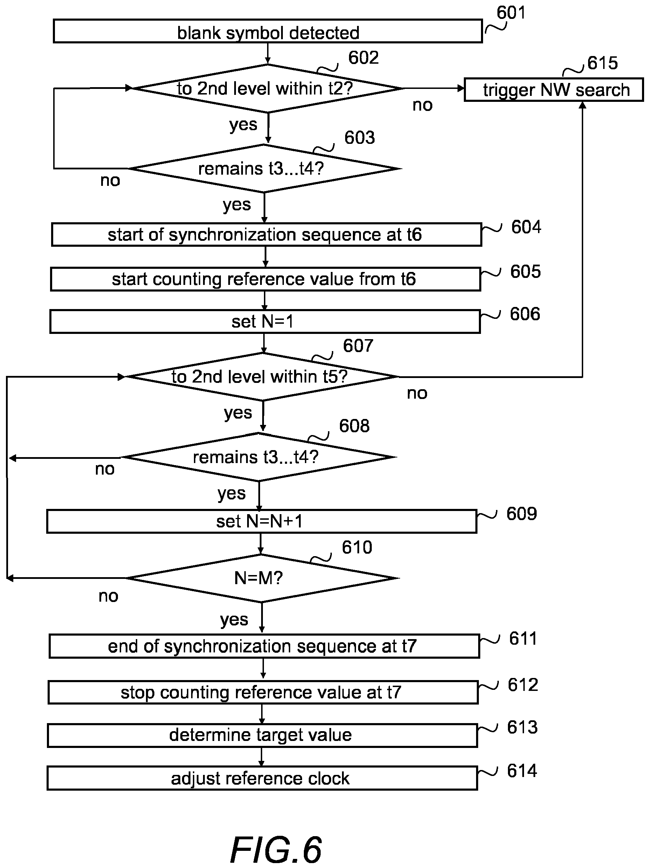

Fig. 6 illustrates an example functionality relating to reference sequences. For the sake of clarity of description, in the example it is assumed that the example of Fig. 2A is implemented, i.e. a synchronization sequence is the reference sequence. It is a straightforward task for one skilled in the art to implement the example with other reference sequences.

Referring to Fig. 6, when a blank symbol has been detected (block 601), for example as described above with Fig. 5, it is monitored (block 602), whether within the second predetermined time t2 after the occurrence of the blank symbol, the signal received changes to the second level. The second predetermined time t2 may be determined using the start of the blank symbol in which case the second predetermined time t2 may be equal to or a little longer than the duration of the blank symbol. The second predetermined time t2 may also be determined using the end of the blank symbol, or using a time point corresponding to the first predetermined time calculated from the start of the blank symbol.

If the signal changes within the second predetermined time after the occurrence of the blank symbol to the second level (block 602: yes), it is monitored (block 603), whether the signal remains at the second level for at least the third predetermined time t3 and for at most the fourth predetermined time t4. If it does not (block 603: no), the process returns to block 602. In other words, short peaks are ignored.

If the signal remains at the second level for at least the third predetermined time t3 and for at most the fourth predetermined time t4 (block 603: yes) a start of a synchronization sequence of the wake up signal at time t6 is detected in block 604. The time t6 is the time when the transition to the second level occurred. In the illustrated example counting a reference value for the reference clock from the time t6 is started in block 605. It should be appreciated that the counting may have started when block 603 was entered, in which case the counting is continued in block 605.

Further, a number N of occasions during which the signal received changes to the second level and remains at the second level for at least the third predetermined time and for at most the fourth predetermined time is set in block 606 to be one.

It is also monitored (block 607), whether the signal changes back to the second level within a fifth predetermined time t5 after the last time the signal remained at the second level at least the third predetermined time and at most the fourth predetermined time. If it changes (block 607: yes), it is monitored (block 608), whether the signal remains at the second level for at least the third predetermined time t3 and for at most the fourth predetermined time t4. If it does not (block 608: no), the process returns to block 607.

If the signal remains at the second level for at least the third predetermined time t3 and for at most the fourth predetermined time t4 (block 608: yes) the number N of occasions is incremented in block 609 by one. In other words, N is set to be N+1. Then it is checked in block 610, whether the number N is equal to a preset number M, which indicates the number of transitions to the second level the synchronization sequence have. In other words, it is checked, whether the number N reaches the preset number M. If it does not (block 610: no), the process returns to block 607.

If the number N is equal to the preset number M (block 610: yes), the end of the synchronization sequence at time t7 is detected in block 611, and counting of the reference value is stopped (block 612) at the time t7, i.e. at the end of the synchronization sequence. Further, a target value for the reference clock at the time t7, i.e. at the end of the synchronization sequence, is determined in block 613. It should be appreciated that the target value may be determined earlier, for example when the start of the synchronization sequence is detected. Then at least frequency of the reference clock is adjusted based on the reference value and the target value, for example as described above with Fig. 3. The adjusting causes also that the reference clock is time synchronized with the system.

If the signal does not change within the second predetermined time after the occurrence of the blank symbol to the second level (block 602: no) it means that after the occurrence of the blank symbol no start of a synchronization sequence is detected, and in the illustrated example a network (NW) search is triggered in block 615. The network search may be performed by the wake up receiver, or triggering the network search may include enabling means for communication with a cellular network, for example enabling (turning on) the main radio, to perform the network search. It should be appreciated that in another example, using the background process of Fig. 4, the process would proceed in block 615 to the block 404 of Fig 4.

If the signal does not change back (block 607: no) to the second level within the fifth predetermined time t5 after the last time the signal remained at the second level at least the third predetermined time and at most the fourth predetermined time, an error in the reception of the synchronization sequence has occurred, and the process proceeds to block 615 to trigger the network search.

In other words, after the blank symbol has been detected (block 601) and the first transition to the second level is evaluated and found acceptable (block 602: yes, block 603: yes) to be a full first bit/ symbol by fulfilling the maximum and minimum time requirements, a time reference point, which refers to a time of the first transition from a low power level (the first level) to a high power level (the second level), may be stored and a full evaluation of the synchronization sequency with respect to frequency offset evaluation, including adjusting the reference clock, may be performed.

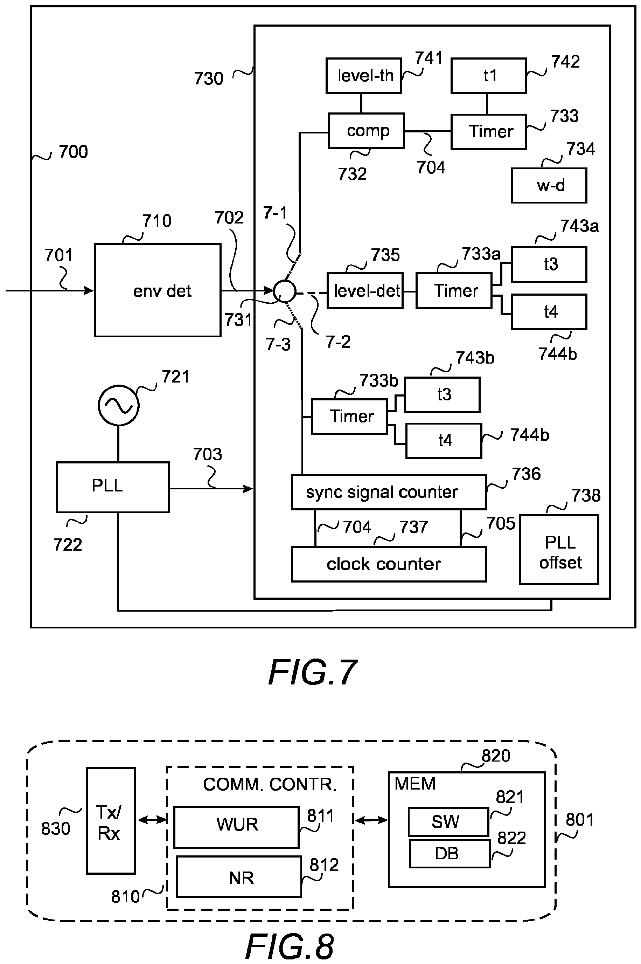

Fig. 7 is a schematic block diagram illustrating a non-limiting example implementation of a state machine for adjusting the reference clock, for example as described above with Fig. 6. The implementation may be a hardware implementation or a software implementation or a combination of hardware and software implementations. In the illustrated example of Fig. 7 it is assumed that an apparatus 700 is in a radio resource connection idle state, or even may be turned off, i.e. there is no active data traffic to/from the apparatus 700, and only a wake up receiver is on. Further, for the sake of clarity of description, in the example it is assumed that the example of Fig. 2A is implemented, i.e. a synchronization sequence is the reference sequence. It is a straightforward task for one skilled in the art to implement the example with other reference sequences.

Different parameters, for example the one or more thresholds for reception level determination, or any of the predetermined time limits, or the number N of transitions, may be prestored to the apparatus and/or received as part of a network configuration signaling, and (re)loaded to the state machine 730. However, for the sake of clarity of description, such functionality is not described with Fig. 7, or with the other Figures.

Referring to Fig. 7, a received signal 701 is inputto an envelope detector (env det) 710, whose output 702 is input to a state switch 731 in the state machine 730 of a wake up receiver. The state switch may be in position 7-1 to detect a blank symbol, or in position 7-2 to detect a start of a synchronization sequence, or in position 7-3 to process the synchronization sequence.

The apparatus 700 comprises at least one real time clock that is based on an oscillator 721 that may generate an interruption with a certain speed, which is increased by a phase-locked loop (PLL) 722 that increases the speed of reference clock interruptions 703 that are input to the state machine. The real time clock may be used simultaneously also for the idle/sleep state timer.

When the state switch 731 is in the position 7-1, a comparator (comp) 732 compares the reception level of the signal 702 to the preset level (level-th) 741 for the first level, and resets/starts 704 a timer 733 to monitor the first predetermined time t1, when a transition to the first level is detected, and may stop the timer 733 if a transition from the first level is detected. Stop of the timer 733 causes the state the state switch 731 to switch to the position 7-2. A watch-dog timer (w-d) 734 is configured to reset the system if no blank symbol is detected. In other words, when the watch-dog timer expires, the main radio, e.g. New Radio radio, is activated.

When the state switch 731 is in the position 7-2, a level detector (level-det) 735 determines, using also a timer 733a, whether the signal 702 remains, after the blank symbol, at the second level at least the third predetermined time t3 and at most the fourth predetermined time t4. When the level detector 735 detects a start of the synchronization sequence, the state switch 731 switches to the position 7-3 to evaluate the synchronization sequence.

When the state switch 731 is in the position 7-3, a timer 733b is used for determining, whether the signal 702 remains at the second level at least the third predetermined time t3 and at most the fourth predetermined time t4, and a sync signal counter 736 counts, for example based on the number of transitions, a target value, and a clock counter 737 counts a reference value based on the clock interruptions, when both counters has been reset/started 704 until both counters 736, 737 are stopped 705. Then a PLL offset counter 738 uses the reference value and the target value to determine frequency offset in ppm, for example by calculating the difference (delta) between the reference value and the target value, and causes adaptation of the phase-locked loop 722 by adapting at least the frequency, and possibly also time. The time may be adapted, for example when discontinuous monitoring is implemented.

The blocks, related functions, and information exchange (signaling) described above by means of Fig. 2A to Fig. 7 in no absolute chronological order, and some of them may be performed simultaneously or in an order differing from the given one. Other functions can also be executed between them or within them, and other information may be sent, and/or other rules applied. Some of the blocks or part of the blocks or one or more pieces of information can also be left out or replaced by a corresponding block or part of the block or one or more pieces of information.

Fig. 8 illustrates an apparatus 801 according to some embodiments. The apparatus 801 may be an apparatus, e.g. an electrical device, for power saving use cases, for example.

The apparatus 801 may comprise one or more communication control circuitries 810, such as at least one processor, and at least one memory 820, including one or more algorithms 821, such as a computer program code (software) wherein the at least one memory and the computer program code (software) are configured, with the at least one processor, to cause the apparatus to carry out any one of the exemplified functionalities of the reduced capability device, or the network device, described above with any of Fig. 1 to Fig. 7. Said at least one memory 820 may also comprise at least one database 822.

Referring to Fig. 8, the one or more communication control circuitries 810 of the apparatus 801 comprise at least a wake up receiver (WUR) circuitry 811 which is configured to perform functionalities relating to reception occurrences of wake up signals, e.g. determine absence or presence of a blank symbol, start of a synchronization sequence, and determine or count different values to adjust a reference clock, according to embodiments. To this end, the wake up receiver circuitry 811 of the apparatus 801 is configured to carry out at least some of the functionalities described above, e.g., by means of Fig. 2A to Fig. 7, using one or more individual circuitries.

The one or more communication control circuitries 810 of the apparatus 801 may further comprise a New Radio (NR) circuitry 812, or corresponding circuitry for communicating over a radio access network. To this end, the new radio circuitry 812 of the apparatus 801 may be configured to carry out at least a network search, using one or more individual circuitries.

Referring to Fig. 8, the memory 820 may be implemented using any suitable data storage technology, such as semiconductor based memory devices, flash memory, magnetic memory devices and systems, optical memory devices and systems, fixed memory and removable memory.

Referring to Fig. 8, the apparatus 801 may further comprise different interfaces 830 such as one or more communication interfaces (TX/RX) comprising hardware and/or software for realizing communication connectivity according to one or more communication protocols. The one or more communication interfaces 830 may enable reception of wake up signals, or blank symbols and synchronization sequences for wake up signals. The one or more communication interfaces 830 may enable connecting to the Internet and/or to a core network of a wireless communications network and/or to a radio access network and/or to other apparatuses within range of the apparatus. The one or more communication interface 830 may provide the apparatus with communication capabilities to communicate in a cellular communication system and enable communication to different network nodes or elements. The one or more communication interfaces 830 may comprise standard well-known components such as an amplifier, filter, frequency-converter, (de)modulator, and encoder/decoder circuitries, controlled by the corresponding controlling units, and possibly one or more antennas.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware. The term 'circuitry' also covers, for example and if applicable to the particular claim element, a baseband integrated circuit for an access node or a terminal device or other computing or network device.

In an embodiment, at least some of the processes described in connection with Fig. 2A to Fig. 7 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Fig. 2A to Fig. 7 or operations thereof.

Embodiments and examples as described may also be carried out in the form of a computer process defined by a computer program or portions thereof. Embodiments of the functionalities described in connection with Fig. 2A to Fig. 7 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. The term "non-transitory," as used herein, is a limitation of the medium itself (i.e., tangible, not a signal ) as opposed to a limitation on data storage persistency (e.g., RAM vs. ROM). Coding of software for carrying out the embodiments as shown and described is well within the scope of a person of ordinary skill in the art.

Even though the embodiments have been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus (120, 700, 801) comprising at least:
means for monitoring (301, 811), based on a reference clock, reception occurrences of wake up signals in time and frequency domains, a wake up signal having at least a first level and a second level;
means (735) for determining (302) signal reception levels during the reception occurrences;
means (732, 733, 811) for detecting (303) an occurrence of a blank symbol (202) of a wake up signal when a signal received during a reception occurrence remains at the first level for a first predetermined time;
means (735, 811) for detecting (304) a start of a synchronization sequence (204) of the wake up signal when within a second predetermined time after the occurrence of the blank symbol (202), the signal received changes to the second level and remains at the second level for at least a third predetermined time (205) and for at most a fourth predetermined time (206;
means (736, 811) for determining (305) a target value for the reference clock at the end of a reference sequence (208);
means (737, 811) for counting (306) a reference value between the start of the synchronization sequence (204) and the end of the reference sequence (208); and
means (738, 811) for adjusting (308) at least frequency of the reference clock based on the reference value and the target value.

2. The apparatus (120, 700, 801) of preceding claim1, further comprising:
means (811) for triggering (406, 615) a network search upon detection that a fifth predetermined time (207) has expired after the last time the signal remained at the second level at least the third predetermined time (205) and at most the fourth predetermined time (206) during a reception of the synchronization sequence (204).

3. The apparatus (120, 700, 801) of preceding claim 1 or 2, further comprising:
means (811) for triggering (406, 615) a network search when after the occurrence of the blank symbol (202) no start of a synchronization sequence (204) is detected.

4. The apparatus (120, 700, 801) of claim 2 or 3, further comprising:
means (812, 830) for communicating with a cellular network, wherein the network search is a cellular network search and the means for triggering the network search (406, 615) is configured to enable the means for communication with the cellular network.

5. The apparatus (120, 700, 801) of any preceding claims, further comprising:
means (730, 811) for counting, after the occurrence of the blank symbol (202), a number of occasions during which the signal received changes to the second level and remains at the second level for at least the third predetermined time (205) and for at most the fourth predetermined time (206); and
means (730,811) for detecting the end of the synchronization sequence (204) when the number reaches a preset number.

6. The apparatus (120, 700, 801) of claim 5, wherein the end of the reference sequence (208) is the end of the synchronization sequence (204) following the blank symbol (202) or the end of a next synchronization sequence (204).

7. The apparatus (120, 700, 801) of any of claims 1 to 5, wherein the end of the reference sequence (208) is a start time of a next synchronization sequence (204).

8. The apparatus (120, 700, 801) of any preceding claim, wherein the means (730, 811) for determining the signal reception levels is configured to compare a reception level to a preset threshold (210) and determine that the signal is at the first level, when the level is below the preset threshold (210).

9. The apparatus (120, 700, 801) of claim 8, wherein the means (730, 811) for determining the signal reception levels is configured to determine that the signal is at the second level, when the level is equal to or above the preset threshold (210).

10. The apparatus (120, 700, 801) of claim 8, wherein the means (730, 811) for determining the signal reception levels are further configured to compare the reception level to a second preset threshold (220) and determine thatthe signal is at the second level, when the level is above the second preset threshold (220).

11. The apparatus (120, 700, 801) of any preceding claims, wherein the means (730, 811) for monitoring is configured to monitor the reception occurrences discontinuously.

12. The apparatus (120, 801) of any preceding claim, wherein the means comprise: at least one processor (810); and at least one memory (820) storing instructions that, when executed by the at least one processor (810), cause the performance of the apparatus.

13. A method comprising:
monitoring (301), based on a reference clock, reception occurrences of wake up signals in time and frequency domains, a wake up signal having at least a first level and a second level;
determining (302) signal reception levels during the reception occurrences;
detecting (303, 504, 601) an occurrence of a blank symbol (202) of a wake up signal when a signal received during a reception occurrence remains at the first level for a first predetermined time;
detecting (304, 604) a start of a synchronization sequence (204) of the wake up signal when within a second predetermined time after the occurrence of the blank symbol (202), the signal received changes to the second level and remains at the second level for at least a third predetermined time (205) and for at most a fourth predetermined time (206);
determining (305) a target value for the reference clock at the end of a reference sequence (208);
counting (306) a reference value between the start of the synchronization sequence (204) and the end of the reference sequence (208); and
adjusting (308) at least frequency of the reference clock based on the reference value and the target value.

14. A computer program comprising instructions which, when executed by an apparatus (120, 700, 801), cause the apparatus to perform at least the following:
monitoring (301), based on a reference clock, reception occurrences of wake up signals in time and frequency domains, a wake up signal having at least a first level and a second level;
determining (302) signal reception levels during the reception occurrences;
detecting (303, 504, 601) an occurrence of a blank symbol (202) of a wake up signal when a signal received during a reception occurrence remains (503) at the first level for a first predetermined time;
detecting (304, 604) a start of a synchronization sequence (204) of the wake up signal when within a second predetermined time after the occurrence of the blank symbol (202), the signal received changes to the second level and remains at the second level for at least a third predetermined time (205) and for at most a fourth predetermined time (206);
determining (305) a target value for the reference clock at the end of a reference sequence (208);
counting (306) a reference value between the start of the synchronization sequence (204) and the end of the reference sequence (208); and
adjusting (308) at least frequency of the reference clock based on the reference value and the target value.
